# EUROPEAN PATENT SPECIFICATION

(11) **EP 2 570 026 B1**
(45) Date of publication and mention of the grant of the patent: **17.01.2018**
(21) Application number: 12250149.7
(22) Date of filing: 11.09.2012
(51) Int. Cl.: A01K 63/04

(54) **Aquarium gravel cleaning system**
Kiesreinigungssystem für Aquarium
Système de nettoyage de gravier pour aquarium

(30) Priority: 14.09.2011 GB 201115901; 21.07.2012 US 201213555137
(43) Date of publication of application: 20.03.2013
(73) Proprietor: Wang, Guangke, Bristol BS6 7JG (GB)
(72) Inventor: Wang, Guangke, Bristol BS6 7JG (GB)

(56) References cited:
- EP-A1- 2 123 155
- EP-A2- 0 616 767
- JP-A- 2002 223 995
- US-A- 4 913 811
- US-B1- 6 386 751

## Description

The present disclosure relates to a gravel cleaning system for an aquarium, e.g. for fish, reptiles etc.

### BACKGROUND

The transfer of fluids is required in many applications. For example, fluids may be sucked from or expelled into a region. One particular application for a fluid transfer system is in aquariums for which it may be desirable to transfer fluids, for example to clean the aquarium gravel.
The use of gravel in an aquarium is not only for decoration but for collection of the debris and organic wastes which settle toward the bottom of the tank. However, it is necessary to periodically remove the particulate debris and organic wastes produced by the fish and aquatic plants in the gravel in order to maintain a healthy environment for the fish.
In this respect, there are two main methods for removing the sediment accumulated in aquarium gravel. The first method comprises cleaning the gravel using a siphon tube or suction tube to remove the sediment in the gravel from above. There are several kinds of siphon tube used at present, for example, GB2110103 discloses a siphon device with a relatively wide inlet tube and a narrow siphon tube. In addition, US2009045143 discloses a gravel vacuum including a suction tube, a pre-filter tower connected to the suction tube, a filter tower, a pump and a return assembly to return the filtered water back to the tank. However, in each case, cleaning the gravel using a suction tube from above leads to problems such as interruption of the fish, the time required to clean the gravel thoroughly, excessive removal of the water and labour intensive.
The second main method for removing the sediment from the gravel is to remove the sediment from beneath the gravel, for example, using an under-gravel filter system, which may be self-cleaning to avoid the problems mentioned above. By way of example, US6007713 discloses a system comprising: screen structures which cover the bottom of an aquarium; a cleaning element slidably mounted under the screen structures; and a suction tube extending upward from the screen structures. Each screen structure has a porous top adapted to support a layer of gravel thereon in spaced relation to the bottom of an aquarium and to allow water and debris to fall into a debris receiving space. The cleaning elements may be moved back and forth by an elongated handle to wipe off the debris in the receiving space between the top screen structure and the bottom of the aquarium and push it towards the suction tube which removes the debris from the aquarium.

US4921614 also discloses an under-gravel filter system having a slidable cleaning element extending across the width of the tank between a screen structure and the bottom of the tank. In US4921614 the cleaning element pushes the debris collected between the screen and the bottom of the tank to a conduit which draws water and the debris out of the tank where it is disposed or otherwise filtered and returned to the tank. The cleaning element has a metallic bar therein which allows the bar to be moved across the bottom of the tank by a magnetic source such as a hand held magnet placed against the bottom of the tank.

In addition, US4957623 discloses a system comprising an aperture gravel-supporting floor plate mounted on the top of a frame and defines a space between the frame and the plate. A stationary guide tube extends upwardly from the floor plate. A movable suction head is located within the space and is connected to a movable siphon tube extending upwardly through the guide tube for movement back and forth to withdraw the contaminants.

Furthermore, US5179911 discloses an under-gravel cleaning apparatus that has a means for flushing the water and debris from the space between a screen structure and the bottom of the tank. This is accomplished by forcing water into one end of the space between the screen structure and the bottom of the tank through a feed tube and drawing the water out of the opposite end of the space through a tube system leading out of the bottom of the tank.

JP2003236317 discloses an aquarium cleaning system, which has a gravel placing means located immediately above a bottom part, the system comprises (a) a water flushing tube located on one end part of the aquarium containing a first tubular member which has first and second end parts and is nearly vertical, (b) a water draining tube disposed on the opposing end part of the aquarium containing a second tubular member which has first and second end parts and is nearly vertical, and (c) a water circulation tube disposed on the opposing end part of the aquarium containing a third tubular member which has first and second end parts and is nearly vertical.

In addition to the above-mentioned prior art documents, other gravel cleaning systems are disclosed in CA1231871, CA2094416 and JP2008284443.

However, the previously-proposed cleaning gravel cleaning systems or methods have not been particularly effective. There are two main reasons for this lack of success. Firstly, all the under gravel cleaning devices mentioned need the screen to match the size of the bottom of tank. Practically, this strictly limits the popularity of such devices as tanks vary in size and shape. Secondly, all the prior art documents disclose the removal of debris from the space between the structure and the bottom of the tank. As such, these documents mainly rely on gravity causing the debris to drop down through the hole of the structure to the space between the structure and the bottom of the tank. As a result the previously-proposed cleaning gravel cleaning systems do not clean the gravel thoroughly or efficiently.
Apart from the above-mentioned prior art documents, JP 2002223995A discloses a sucking device which have an outer pipe and an inner pipe which is disposed inside the outer pipe so as to be freely relatable. A plurality of first sucking ports opposed to a surface to be cleaned are formed in the outer pipe at interval along an axial direction. A plurality of second sucking ports are formed in the inner pipe provided at positions superimposing on the first sucking ports and helically arrayed. The inner pipe is rotated and driven by a motor so that the positions of the first and second sucking ports mutually superimposed are successively moved along the axial direction.
EP2123155A1 discloses a filtering unit with an outlet means which comprise three outlets and a multiple outlet selector which is formed by a tube. The tube has a substantially vertical axis and has three openings axially and anqularly corresponding to the three outlets. The tube is rotatable by turning a knob connected to it. Different outlets may be selected by turning the knob manually.
US 6386751B1 discloses a diffuser which includes a rotor and a stator with openings on them. The infusion materials are drawn through openings in the rotor and stator.The rotor is rotated and driven by a motor so the infusion materials and the host material can be effectively mixed .
However, all the three above-mentioned documents need a motor or by hand to rotate the inside part to work. This is not suitable for a device applied in the bottom of an aquarium .Firstly, the noise of a motor(or motors) or putting hand into the water interrupts the fishes .Secondly, there is possibility that the fishes in the tank get electric shock ,especially when plurality motor are used. Thirdly, if only one motor drives plurality tube to rotate at the same time, the strong suction power can't be produced locally.But this is essential to suction grave in a fish tank. Fourthly, using plurality of motors makes it too complex and difficult to arrange the parts of the suction system under grave of an aquarium. Finnally, using a plurality of sucking ports in the pipes may suck dust effectively on the surface with a moving suction head, but it can't guarantee to suck every corner with a stationary device laying under the grave of a fish tank.

The present disclosure therefore seeks to address these issues.

### SUMMARY OF THE INVENTION

According to the present invention there is provided a gravel cleaning system for an aquarium as claimed in independent claim 1. Preferred embodiments of the gravel cleaning system according to the invention are set out in the dependent claims 1 to 12.

### BRIEF DESCRIPTION OF THE DRAWINGS

For a better understanding of the present disclosure, and to show more clearly how it may be carried into effect, reference will now be made, by way of example, to the accompanying drawings, in which:-
FIG 1 is a perspective schematic view of the aquarium gravel cleaning system according to an example of the present invention;
FIG 2 is a plan view of a tubular member according to an example which does not form part of the present invention;
FIG 3 is a cross sectional view of a tubular member according to an example of the present invention with two fins on its inner wall;
FIG 4 is a schematic view of a receiving portion passage and a tubular member according to an example which does not form part of the present invention;
FIG 5 is a plan view of the receiving portion passage according to a further example of the present invention;
FIG 6 is a plan view of the tubular member according to a further example of the present invention;
FIG 7 is a schematic view of the two main parts of the base assembly according to an example of the present invention; and
FIG 8 is a schematic view of the rotating member, its control and a spring backed connector according to an example of the present invention.

### DETAILED DESCRIPTION

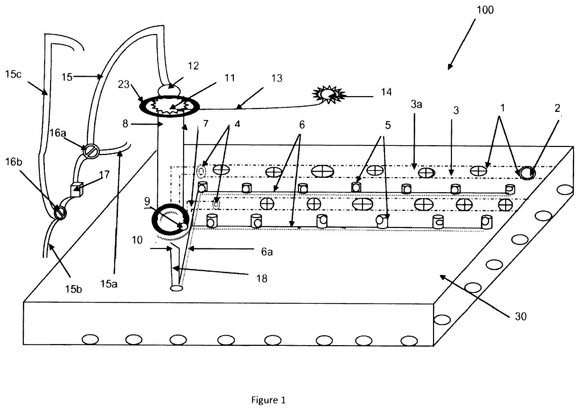

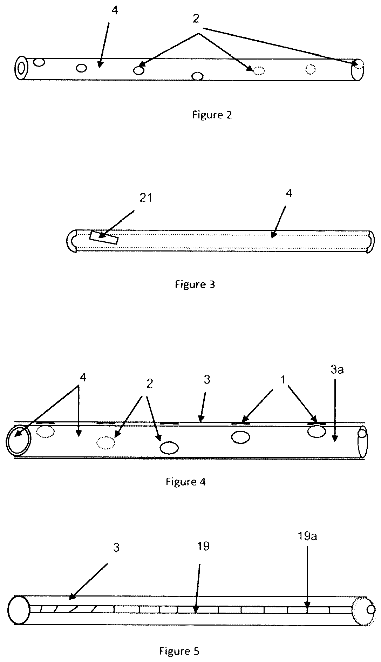

With reference to FIG 1, a fluid transfer system according to the present invention comprises a gravel cleaning system 100 for an aquarium. The gravel cleaning system 100 comprises a tubular member 4 and a base assembly 30 comprising a receiving portion 3 adapted to receive the tubular member 4. The base assembly 30 may be provided at the bottom of the aquarium. As a result, the receiving portion 3 is arrangeable adjacent to gravel at the bottom of the aquarium and receives the tubular member 4. The tubular member 4 and receiving portion 3 may be substantially horizontal. The receiving portion 3 comprises a passage 3a for receiving the tubular member 4 such that the tubular member may fit within the passage 3a and that the tubular member may be free to rotate with respect to the receiving portion 3. The tubular member 4 may comprise a hollow cylinder and the receiving portion 3 may comprise a cylindrical tunnel for receiving the tubular member 4. As shown in FIG 4, the tubular member 4 may substantially occupy the space within the receiving portion 3, while the tubular member 4 may still rotate freely within the tunnel of the receiving portion 3.

As depicted in FIG 1, the base assembly 30 may be rectangular in cross-section and may comprise one or more receiving portions 3 each with a passage 3a receiving a corresponding tubular member 4. Adjacent receiving portions 3 may be integrally formed, e.g. unitary. However, the receiving portions may be modular and may be connected to adjacent receiving portions each with a tubular member. In an alternative arrangement (not shown), the receiving portion may also comprise a hollow cylinder and there may be a plurality of such receiving portions provided within the aquarium. Such an arrangement would allow greater flexibility in the positioning of the receiving portions in the aquarium. In either case, the receiving portion and tubular member combination may be configured to cover a range of aquarium sizes. As shown in FIGs 2 and 4 but not according to the invention, the tubular member 4 may comprise one or more openings 2 arranged along the length of the tubular member 4. Similarly, as shown in FIGs 1 and 4, the receiving portion 3 may comprise one or more openings 1 arranged along the length of the receiving portion passage 3a. For example, the openings 1 of the receiving portion 3 may be arranged in a side-wall of the receiving portion passage 3a and the openings 2 of the tubular member 4 may be arranged on a side-wall of the tubular member 4.
The openings 1, 2 of the receiving portion 3 and the tubular member 4 are longitudinally disposed along the length of the receiving portion passage 3a and tubular member. The openings 1, 2 are disposed at corresponding longitudinal locations so that corresponding openings 1, 2 may overlap at a particular relative rotational position. The openings 1, 2 of the receiving portion 3 and the tubular member 4 may have the same shape and there may be the same number of openings 1 of the receiving portion 3 as openings 2 of the tubular member 4.
As depicted in FIGs 2 and 4, the openings 2 of the tubular member 4 may be spirally disposed about the tubular member. By contrast, the receiving portion openings 1 may be provided on a top side of the receiving portion 3 and the openings 1 may be longitudinally aligned. The openings 1 may also be provided on a side-wall of the receiving portion 3. In the alternative arrangement where the receiving portion is a hollow cylinder, the openings 1 may be disposed about the circumference of the receiving portion, e.g. they may be disposed in a spiral fashion). According to the invention, the tubular member 4 is fluidically connected to a pump 17 arranged to suck water from within the tubular member. According to the invention, the openings 1, 2 of the receiving portion 3 and tubular member 4 are arranged such that there is an only partial overlap between the openings 1, 2 at a particular longitudinal location and at a particular relative rotational position between the tubular member 4 and receiving portion 3. Thanks to the arrangement of the tubular member openings 2, the overlap of the openings 1, 2 moves to successive openings along the length of the tubular member 4 as the tubular member rotates with respect to the receiving portion 3. As a result, water from the aquarium may be sucked through the opening overlap and into the tubular member from around the gravel at successive longitudinal locations. The detritus from around the gravel may thus be removed.

When the tubular member 4 rotates the opening 2 on the tubular member 4, which has met and overlapped with the corresponding opening 1 on the receiving portion passage 3a, may move away from the opening 1 and the next opening 2 along the tubular member 4 may meet the next opening 1 along the receiving portion passage 3a such that the next openings 1, 2 may overlap and be in an open position to the gravel. Accordingly, there may be only one pair of openings exposed to the gravel while the others are in a closed position (although more than one pair of openings 1, 2 per tubular member 4 may be open at a particular time, e.g. in the case of a spiral of openings 2 which continues for more than one revolution about the tubular member 4). By only having a limited number of the openings 1, 2 overlapping at a particular time, a stronger suction and greater water flow rate can be provided locally. As a result, all the gravel over or around the receiving portion 3 can in turn be effectively suctioned.

The openings 1 and/or openings 2 of the receiving portion 3 and tubular member 4 may be sized to avoid the adjacent gravel entering the tubular member 4. For example, the openings 1 and/or openings 2 may be smaller than the majority of the gravel pieces, e.g. smaller than the smallest pieces of gravel. By contrast, the openings 1 and/or openings 2 may be sufficiently large to receive the detritus from around the gravel. Between these extremes, the openings 1 and/or openings 2 may also be sized to optimise the suction pressure and/or cleaning rate.

In addition to the openings 1, 2 provided in the side-walls of the receiving portion passage 3a and tubular member 4, openings may be provided at a distal end of the receiving portion passage 3a and tubular member 4. Water may be sucked through such openings regardless of the relative rotational position of the receiving portion 3 and tubular member 4 or preferably only when such openings overlap in a manner similar to that for openings 1, 2. The openings at the end of the receiving portion passage 3a and tubular member 4 may provide additional suction to clean the gravel at the edge of the receiving portion. Alternatively or additionally, the openings in the side-walls of the receiving portion 3 and tubular member 4 may be spaced and/or sized such that there is always an overlap between openings 1, 2 and that a flow of fluid is always permitted from the aquarium to the centre of the tubular member 4. The openings 1, 2 of the receiving portion 3 and tubular member 4 may also be shaped so that the total overlap area between the openings 1, 2 remains constant.
The gravel cleaning system 100 further comprises a first drive member configured to rotate the tubular member 4 with respect to the receiving portion 3. As depicted in FIG 3, the first drive member comprises one or more fins or vane surfaces 21 provided in the tubular member 4. By way of example there may be two or three vanes 21 per tubular member 4. The vanes 21 may be configured to rotate the tubular member 4 upon the flow of water through the tubular member. When the water flow goes through the tubular member 4 it will impel the fins and drive the tubular member 4 to spin. The vanes 21 may be provided at or towards an end of the tubular member 4, e.g. at a downstream end where the flow of water through the tubular member is greatest. Referring still to FIG 1, the gravel cleaning system 100 may further comprise one or more nozzles 5. A nozzle 5 may be provided for each opening 1 in the receiving portion 3 and the nozzle 5 may be directed towards the corresponding opening 1. The nozzles 5 may be provided in rows, with a row for each receiving portion passage 3a, e.g. in the case of there being a plurality of receiving portion passages and tubular members 4. Each row of nozzles 5 may fluidically connect to a pipe 6. The pipe 6 may be provided in the base assembly 30 and the pipe 6 may be located between adjacent receiving portion passages 3a. The pipes 6 for each of the rows of nozzles 5 may fluidically connect to a connecting pipe 6a. The connecting pipe 6a may also be provided within the base assembly 30 and the connecting pipe 6a may pass over or under the passages 3a. The connecting pipe 6a may in turn be fluidically connected to a water supply tube 18 with an inlet 10. The water supply tube 18 may be substantially vertically disposed and the inlet 10 may be provided at a top end of the water supply tube above the level of the gravel. The inlet 10 may thus provide an opening for the tank water to get in and flow to the nozzles 5 via connecting pipe 6a and pipes 6.
The nozzles 5 may assist the cleaning suction, for example when using smaller gravel or a thick layer of gravel. For example, the nozzles 5, pipes 6, 6a and water supply tube 18 may provide a flow path for the water to the openings 1, 2 with a lower resistance than through the smaller gravel or thick layer of gravel. The suction rate may therefore be enhanced by the presence of the nozzles 5.

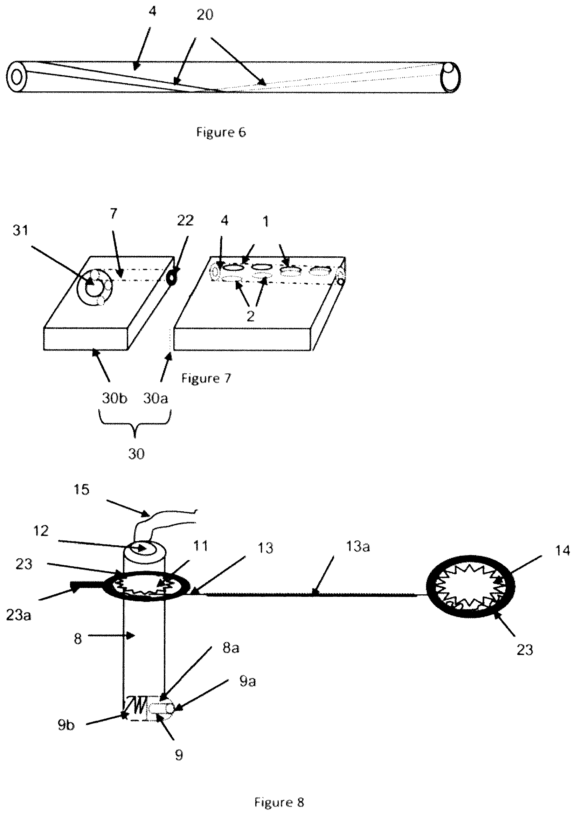

Referring to FIG 5, the opening 1 in the receiving portion passage 3a is, according to the invention, in the form of a slit 19, e.g. instead of the discrete holes shown in the previous FIGs. The slit 19 may be longitudinally disposed along the length of the passage 3a or the slit may be spirally disposed, e.g. in the case of the receiving portion 3 being tubular. As depicted in FIG 6, the tubular member 4 has, according to the invention, an opening 2 in the form of a slit 20. In the case of one of the slits 19, 20 being longitudinally disposed, the other of the slits 19, 20 may be spirally disposed. Alternatively, both slits 19, 20 may be spirally disposed. In the case of both slits being spirally disposed, the angle of the spiral for the slits 19, 20 may be different to ensure that an overlap does not occur at all longitudinal locations at once. By way of example, the spiral slits 19, 20 may be orientated in opposite rotational directions, e.g. clockwise and counter-clockwise spirals. Although not shown, either or both of the spiralled slits 19, 20 may be orientated in both directions, e.g. with both clockwise and counter clockwise spirals and a point of inflection at which the spiral changes direction.

As depicted in FIG 5, the slit 19 in the receiving portion 3 may comprise grid bars 19a disposed across the slit 19. The grid bars 19a may prevent the unwanted inhalation of small gravel pieces into the tubular member 4. The grid bars 19a may be disposed across the top of the slit 19. Similar grid bars may additionally or alternatively be provided across the slit 20 of the tubular member 4.

With reference to FIG 7, the gravel cleaning system 100 comprises a base assembly 30 comprising two or more constituent parts. A first part 30a may comprise one or more of the receiving portion passages 3a. One or more of the first parts 30a may connect to a second part 30b, which may act as a hub for the first parts 30a. The second part 30b may in turn connect to the pump 17 to provide suction to the tubular members 4. The separation of the first and second parts 30a, 30b may permit the assembly of the tubular members 4 into the receiving portion passages 3a within the first part. The separation of the first and second parts 30a, 30b may also permit ready disassembly, e.g. to clean the components. The discrete first and second parts 30a, 30b of the base assembly may also permit a modular system, with additional first parts 30a being added for a larger aquarium.
The second part 30b of the base assembly 30 may comprise one or more passages 7 which are in fluid communication with corresponding receiving portion passages 3a. The passages 7 may converge on a chamber 31 within the second part 30b of the base assembly 30. The chamber 31 may fluidically connect to the pump 17 and may thus serve to distribute the suction from the pump to one or more of the tubular members 4. Although not shown in FIG 7, the nozzles 5, pipe 6, connecting pipe 6a and water supply tube 18 may be provided in or on the first part 30a of the base assembly 30.

A fluid tight connection may be provided between the first and second parts 30a, 30b of the base assembly 30. A male-female type connection with a passage therethrough may be provided in this regard. In any event, one part of the base assembly 30 may overlap with the other when the first and second parts 30a, 30b are assembled so that a fluid tight connection between the passage 7 and receiving portion passage 3a is provided and there is no significant loss of suction. Alternatively or additionally, the proximal end of each tubular member 4 may be connected to a ball bearing type connector 22, which may be connected to the second part 30b of the base assembly 30 around the opening of the passage 7. The connector 22 may comprise a passage therethrough and the tubular member 4 may abut a ball part of the connector. The connector 22 may thus permit relative rotation between the tubular member 4 and base assembly 30, whilst ensuring a fluid tight connection.

With reference to FIGs 1 and 8, in the case of there being a plurality, of receiving portions 3 and tubular members 4, the gravel cleaning system 100 may further comprise a selecting means arranged to selectively provide suction from the pump 17 to one of the tubular members 4. The selecting means may comprise a rotatable member 8 with a passage therethrough and an opening 8a which is selectively connectable to a particular tubular member 4 by virtue of the rotation of the rotatable member 8. The rotatable member 8 may selectively connect opening 8a with a particular passage 7 for each tubular member 4. Thus, by turning the rotatable member 8 and connecting to each tubular member 4 in turn, all areas of the aquarium gravel may be thoroughly suctioned.

As depicted, the rotatable member 8 may be tubular and in the particular example shown, the rotatable member 8 may extend substantially vertically, e.g. from the base assembly 30 to a point above the gravel, e.g. above the water level. The rotatable member 8 may rotate within the chamber 31 provided in the second part 30b of the base assembly 30. The opening 8a may be provided at or towards the bottom of the rotatable member 8. The opening 8a may be provided in a side-wall of the rotatable member 8.

A rotatable joint 12 may be provided, e.g. at a top end of the rotatable member 8. The rotatable joint 12 may provide a fluid tight connection between the rotatable member 8 and a pipe 15 which connects to the pump 17. The rotatable joint 12 may be in the form of a universal ball joint connector which comprises a ball engaging the rotatable member 8 and a central passageway providing a fluid communication route between the pipe 15 and rotatable member 8. The ball may permit rotation between the ball and the rotatable member 8 and a seal may be provided therebetween. As a result, the rotatable joint 12 may allow the rotatable member 8 to rotate whilst maintaining a fluid tight connection between the pump 17 and rotatable member 8.

The rotatable member 8 may comprise a biased connector 9, which may be configured to provide a seal between the opening 8a of the rotatable member 8 with a selected tubular member 4. In particular, the biased connector 9 may provide a fluid tight connection between the rotatable member 8 and the passage 7 to ensure that the maximum suction pressure reaches the tubular member 4. The biased connector 9 may be provided at or towards the bottom of the rotatable member 8. The biased connector 9 may form a ball-and-socket type connection. For example, the biased connector 9 may have a substantially spherical head 9a which is biased towards the opening 8a by a resilient means, e.g. spring 9b. The spherical head 9a may comprise a central horizontal passageway to permit the flow of water through the biased connector 9. When the rotatable member 8 is rotated from one passage 7 to the next, the spherical head 9a of the connector 9 is pressed back against a side-wall of the chamber 31 surrounding the rotatable member 8. Then, when the connector 9 meets the passage 7 of the next tubular member 4, the spring 9b pushes the spherical head 9a into the passage 7 to tightly connect the passage 7 with opening 8a.

The rotatable member 8 may be rotated manually. However, the aquarium gravel cleaning system 100 may further comprise a second drive member configured to rotate the rotatable member 8. The second drive member, which may comprise a motor, e.g. a stepper motor, may drive the rotatable member 8 directly or the second drive member may drive the rotatable member 8 through a gear assembly. For example, the rotatable member 8 may be rotated through a gear 11 connected to the rotatable member 8 and a control gear 14, which may be positioned outside the aquarium. The control gear 14 may directly drive the gear 11 or, as depicted, a belt 13 may be provided between the control gear 14 and gear 11. The belt 13 may comprise teeth for engaging teeth provided on the gears 11, 14 or the belt and gears may have no teeth.

The belt 13 may be provided within a protective tube 13a, which may be flexible and may be made from plastic. The tube 13a may be fixed onto a side wall of the aquarium (not shown). Similarly, there may be protective rings 23 outside of both gear 11 and the control gear 14 to keep the belt 13 around them. The rings may be made from plastic. The ring 23 serving the gear 11 may be fixed on the wall of the tank through a connector, e.g. in the form of bar 23a. The bar 23a may be made from plastic. When the control gear 14 is rotated, e.g. by hand or via a motor (not shown), the belt 13 drives the gear 11 to turn the rotatable member 8 such that the next tubular member 4 may be fluidically connected to the pump 17.

Referring back to FIG 1, the aquarium gravel cleaning system 100 may further comprises a first valve 16a arranged to selectively connect a first side of the pump 17 to the tubular members 4. The first valve 16a may selectively permit the suction flow from the rotatable member 8 to the pipe 15 and thence to the pump 17. The aquarium gravel cleaning system may further comprise a second valve 16b arranged to selectively connect a second side of the pump 17 to a container (not shown) via pipe 15c. The container may receive the suctioned water from the pump 17.

In addition to providing suction to the tubular members 4, the pump 17 may in a second mode of operation provide clean water to the aquarium. To enable this additional mode of operation, the first valve 16a may also be arranged to selectively connect the pump 17 to a source of clean water via a pipe 15a. The source of clean water may comprise dirty water taken from the aquarium after it has passed through a filter (not shown). The second valve 16b may also be arranged to selectively connect the pump 17 to the aquarium to provide the aquarium with the clean water via a pipe 15b. As such, the first and/or second valves 16a, 16b may be three-way valves with the valves being able to fluidically connect any two outlets. Thus, after the suction cleaning of the gravel has finished, switches or handles in the valves 16a, 16b may be activated (either manually or automatically) to allow the pump 17 to again provide clean water to the aquarium.

A control system (not shown) may be provided to manage the power to the pump, the valve settings and power to the first and/or second drive members (where provided).

For example, a switch, e.g. a toggle switch, may be provided, which in a first position configures the pump 17 and valves 16a, 16b to provide clean water to the aquarium and in a second position configures the pump and valves to suck water from within the tubular members 4. When in the second position, the switch may also activate the motor for rotating the rotatable member 8 so that each tubular member 4 may be automatically selected in turn. If provided, the motor which may drive the rotation of the tubular members 4, may also be activated when the switch is in the second position.

In summary, some of the advantages of the present invention are as follows:
- The gravel cleaning system may be modular and may thus be extended to cover any size of aquarium. Equally, the suction holes on the side of the base assembly allow the suction effect to go beyond the area covered by the base assembly. As a result one size of base assembly may serve a range of different aquarium sizes.
- Effective cleaning of the gravel as every corner in the gravel can be cleaned effectively by the equal and focused suction power.
- The cleaning system is very easy to use as once the system is installed at the bottom of the aquarium, it is a simple case of operating the pump to provide suction and all the bottom area of the aquarium may be suctioned automatically.
- There may be no interruption to the fish. The aquarium does not have to be emptied to clean the gravel and the suction procedure happens under the gravel quietly.
- As the suction is very effective, it would not suction out too much water to clean the gravel. However, the right amount of water can still be suctioned out in order to perform the correct amount of water changing.
- The configuration of the water hoses makes the water changing very easy by using the same pump to pump the treated water to the aquarium.
- The arrangement disclosed herein, e.g. with the rotatable member, makes it possible to use this system in a high walled tank without any inconvenience.
It is to be noted that the present invention is not limited to applications requiring suction. For example, the above-described arrangement may be reversed such that the pump is configured to expel fluids from the pump to the tubular member, through the respective openings and thence to a region adjacent to the system. For example, the expulsion of fluids from the system may be applied to help dislodge any debris, e.g. prior to a suction mode of operation(in this case, the aquarium gravel cleaning system may further comprise a third valve(not show) arranged to selectively connect tube 15c to tube 15).
In addition to the aquarium gravel cleaning system described above, the present disclosure may be applied in other applications requiring the transfer of fluids, but not according to the invention. For example, the arrangement and features described above with respect to the gravel cleaning system may be applied in any other fluid transfer application, in particular the present disclosure may be applied in cases where a focussed flow of fluids is required. Particular examples include a vacuum suction head (e.g. for a vacuum cleaner), a tune changeable musical instrument (e.g. flute), a water feature (e.g. a fountain or sprinkler) or any other fluid transfer system.
In the case of a tune changeable flute, a reed may be operatively connected to the tubular member, which is provided in a pipe corresponding to the receiving portion described above. When air is blown in through the reed, the resulting air flow impels the fins in the tubular member and drives the tubular member to spin. The tune from the pipe will change automatically as air flows out from openings at different distances to the reed.
In the case of a water feature, a water pump may be operatively connected to the tubular member. The water flow may impel the fins and drive the tubular member to spin. The water flow may come out from the receiving portion at successive locations.

## Claims

1. A gravel cleaning system for an aquarium comprising:
a tubular member (4) comprising a slit shaped opening (20) arranged along the length of the tubular member, and one or more vanes (21) provided in the tubular member, wherein the tubular member is connectable to a pump arranged to suck fluid from within or expel fluid to the tubular member;
a receiving portion (3) comprising a passage for receiving the tubular member such that the tubular member fits within the passage and that the tubular member is free to rotate with respect to the receiving portion, wherein the receiving portion comprises a slit shaped opening (19) arranged along the length of the receiving portion passage;
a base assembly(30) comprising the receiving portion(3),said base assembly being arrangeable adjacent to gravel at the bottom of the aquarium, wherein the openings (20;19) of the tubular member (4) and the receiving portion (3) are arranged such that there is an only partial overlap between the openings of the tubular member and receiving portion at a particular longitudinal location and at a particular relative rotational position between the tubular member and receiving portion; the vanes (21) being configured to rotate the tubular member upon the flow of fluid through the tubular member. and that as the tubular member rotates with respect to the receiving portion the opening overlap moves along the length of the tubular member and receiving portion and fluid from the aquarium is sucked into the tubular member from around the gravel, or expelled from the tubular member to, a region adjacent to the system at successive longitudinal locations.

2. The gravel cleaning system for an aquarium of claim1, **characterised in that** the openings of the tubular member and/or receiving portion are spirally disposed about the tubular member and/or receiving portion passage.

3. The gravel cleaning system for an aquarium of any preceding claim, **characterised in that** the system further comprises a plurality of tubular members arrangeable within one or more receiving portions.

4. The gravel cleaning system for an aquarium of claim 3, **characterised in that** the system further comprises a selecting means (8) arranged to selectively provide suction or expulsion from the pump to each of the tubular members in turn.

5. The gravel cleaning system for an aquarium of claim 4, **characterised in that** the selecting means comprises a rotatable member (8) with an opening which is selectively connectable to a particular tubular member by virtue of the rotation of the rotatable member.

6. The gravel cleaning system for an aquarium of claim 5, **characterised in that** the system further comprises a drive member (11, 14) configured to rotate the rotatable member.

7. The gravel cleaning system for an aquarium of claim 5 or 6, **characterised in that** the selecting means comprises a biased connector (9) which is configured to provide a seal between the opening of the rotatable member with the particular tubular member.

8. The gravel cleaning system for an aquarium of any preceding claim, **characterised in that** the system further comprises a first valve (16a) arranged to selectively connect the pump to the tubular member.

9. The gravel cleaning system for an aquarium of any preceding claim, **characterised in that** the system further comprises a second valve (16b) arranged to selectively connect the pump to a container for receiving the suctioned fluid or for providing the fluid to be expelled.

10. The gravel cleaning system for an aquarium of claims 8, and 9, **characterised in that** the first valve (16a) is further arranged to selectively connect the pump to a source of clean fluid and the second valve (16b) is further arranged to selectively connect the pump to the aquarium to provide the aquarium with the clean fluid.

11. The gravel cleaning system for an aquarium of claim 9 or 10, **characterised in that** the system further comprises one or more nozzles (5) arranged adjacent to the gravel, the nozzles being fluidically connected to fluid in the aquarium.

12. The gravel cleaning system for an aquarium of claim 11, **characterised in that** the system further comprises piping (6, 6a, 18, 10) connecting the nozzles to fluid in the aquarium above the gravel.

## Patentansprüche

1. Ein Reinigungssystem für ein Aquarium Kies bestehend aus:
eine röhrenförmige Mitglied (4) bestehend aus einem Schlitz geformt öffnen (20) angeordnet an die Länge des rohrförmigen Elements, und einem oder mehreren Schaufeln (21) zur Verfügung gestellt, die röhrenförmigen Mitglied, wobei das Rohrelement an eine Pumpe angeordnet ist, um Flüssigkeit aus saugen innerhalb oder vertreiben die röhrenförmige Flüssigkeit Mitglied;
ein Teil (3) bestehend aus einer Passage für empfangen das Rohrelement solche, die das Rohrelement passt in die Passage und die das Rohrelement ist kostenlos, in Bezug auf den empfangenden Teil zu drehen, wobei der empfangende Teil umfasst eine Schlitz Form Eröffnung (19) angeordnet entlang der Länge des die empfangen Teil-Passage;
ein Basis Montage (30) bestehend ausdieempfangenTeil (3), sagte Basis Montage wird er neben , Kies bei die unten der die Aquarium, wobei die Öffnungen (20; 19) des rohrförmigen Elements (4) und die empfangen Teil (3) sind so angeordnet, dass gibt es eine nur teilweise überlappen zwischen den Öffnungen der Rohrelement und empfangenden Teil an einem bestimmten Ort längs- und an eine bestimmte relative Drehposition zwischen Rohrelement und empfangenden Teil;
die Lamellen (21) wird so konfiguriert, dass Drehen die Stahlrohr Mitglied auf die Strömung der Flüssigkeit durch das Rohrelement. und, als die röhrenförmigen Mitglied dreht sich in Bezug auf den empfangenden Teil bewegt die Überlappung der Öffnung entlang der Länge des das Rohrelement und empfangen Teil und Flüssigkeit aus dem Aquarium ist gesogen in die Rohrelement von rund um den Kies oder ausgeschlossen das Rohrelement zu einer Region angrenzend an das System an aufeinanderfolgenden längs- Standorten.

2. Das Kiesbett Reinigungssystem für ein Aquarium von claim I, **dadurch gekennzeichnet, dass** die Öffnungen der Rohrelement und/oder empfangenden Teil über spiralförmig angeordnet sind die Rohrelement und/oder empfangenden Teil Passage.

3. Die Kies Reinigung System für eine Aquarium der vorhergehenden behaupten, charakterisiert in diesem die System weiter umfasst eine Pluralität von röhrenförmigen Mitglieder aufstellbare in eine oder empfangen mar Portionen.

4. Das Kiesbett Reinigungssystem für ein Aquarium von Anspruch 3, **dadurch gekennzeichnet, dass** das System eine Auswahl umfasst bedeutet (8) angeordnet, um selektiv bieten saugen oder Ausweisung von der Pumpe in jedes Mitglied in dem röhrenförmigen verwandeln.

5. Das Kiesbett Reinigungssystem für ein Aquarium von Anspruch 4, **dadurch gekennzeichnet, dass** die Auswahl der Mittel besteht aus einer drehbaren Mitglied (8) mit einer Öffnung die ist selektiv anschließbar an einen bestimmten Rohrelement aufgrund der Drehung des die drehbare Mitglied.

6. Das Kiesbett Reinigungssystem für ein Aquarium nach Anspruch 5, **dadurch gekennzeichnet, dass** das System weiter eines Antriebselements besteht aus(11, 14) so konfiguriert, dass Drehen die drehbare Mitglied.

7. Das Kiesbett Reinigungssystem für ein Aquarium nach Anspruch 5 oder 6, **dadurch gekennzeichnet, dass** die bedeutet die Auswahl umfasst einen voreingenommenen Stecker (9) die ist so konfiguriert, dass bieten ein Abdichtung zwischen der Eröffnung des betreffenden drehbar mit bestimmten Rohrelement.

8. Das Kiesbett Reinigungssystem für ein Aquarium von einem der vorhergehenden Ansprüche, **dadurch gekennzeichnet, dass** das System eine erste umfasst Ventil (16a) angeordnet, um selektiv verbinden die Pumpe das Rohrelement.

9. Das Kiesbett Reinigungssystem für ein Aquarium von einem der vorhergehenden Ansprüche, **dadurch gekennzeichnet, dass** das System eine zweite umfasst Ventil (16) angeordnet, um selektiv verbinden Sie die Pumpe in einen Container für den Empfang von angesaugten Flüssigkeit oder für die Bereitstellung der Flüssigkeit ausgestoßen werden.

10. Das Kiesbett Reinigungssystem für ein Aquarium von Ansprüchen 8 und 9, **dadurch gekennzeichnet, dass** die erste Ventil (16a) weitere Verbindung selektiv die Pumpe angeordnet ist ein Quelle von saubere Flüssigkeit und die zweite Ventil (16 b) weitere angeordnet ist, um selektiv zu verbinden die Pumpe in das Aquarium, das Aquarium die saubere Flüssigkeit zur Verfügung zu stellen.

11. Das Kiesbett Reinigungssystem für ein Aquarium von Anspruch 9 oder 10, **dadurch gekennzeichnet, dass** das System weiter besteht aus einem oder mehreren Düsen (5) angeordnet, angrenzend an die Kies, die Düsen strömungstechnisch Anschluss an Flüssigkeit im Aquarium.

12. Die Kies-Reinigung-System für ein Aquarium nach Anspruch II, **dadurch gekennzeichnet, dass** das System weiter besteht aus Rohrleitungen (6, 6a, 18, 10) die Düsen zu verbinden Flüssigkeit in die Aquarium oben die Kies.

## Revendications

1. Un gravier de nettoyage système pour un aquarium comprenant :
tubulaire membre (4) comprenant une fente en forme de d'ouverture (20) disposées le long le longueur du membre tubulaire et un ou plusieurs ailettes (21) fourni dans la tubulaire membre de , dans laquelle le membre tubulaire est connectable à une pompe arrangée pour aspirer le liquide de dans ou d'expulser le liquide du tube membres;
reçoit un partie (3) comprenant un passage pour réception le tubulaire membre tel que le membre tubulaire s'inscrit dans le passage et que le membre tubulaire est libre en rotation en ce qui concerne la partie réceptrice, où la partie récepteur comprend un fente en forme ouverture (19) disposées le long de la réception passage de la partie;
un base Assemblée (30) comprenant la réception partie (3), a déclaré base Assemblée étant aménageables adjacents à gravier à la bas de la aquarium, dans laquelle les ouvertures (20; 19) du membre tubulaire (4) et la réception partie (3) sont disposés tels qu'il y ait une seule partielle se chevauchent entre les ouvertures du membre tubulaire et partie récepteur à un endroit donné longitudinal et à une position particulière de rotation relative entre le membre tubulaire et la partie réceptrice;
les ailettes (21) en cours de configuration pour faire tourner la tubulaire membres lors de l'écoulement du fluide à travers le membre tubulaire. et que, comme le tube membres tourne en ce qui concerne la partie réceptrice que le chevauchement d'ouverture se déplace le long du le membre tubulaire et réception partie et fluide de l'aquarium est aspiré en le tubulaire membre d'autour du gravier, ou expulsés le membre tubulaire, à une région adjacente au système à successifs longitudinal lieux.

2. Le gravier de nettoyage système pour un aquarium de revendication 1, **caractérisé en ce que** les ouvertures des membres tubulaire et/ou partie réceptrice sont disposées en spirale sur le membres tubulaire et/ou une partie récepteur passage.

3. Le gravier nettoyage système pour un aquarium de tout précédent demander, **caractérisée** dans cette le système plus comprend un pluralité de tubulaire membres aménageables dans un ou réception de mar parties.

4. Le gravier de nettoyage système pour un aquarium de la revendication 3, **caractérisé en ce que** le système plus comprend une sélection signifie (8) disposées de façon sélective fournir aspiration ou l'expulsion de la pompe à chacun des membres tubulaires en tourner.

5. Le gravier de nettoyage système pour un aquarium de la revendication 4, **caractérisé en ce que** le moyens de sélection comprend un rotatif membre (8) avec une ouverture qui est sélectivement connectables à un membre particulier tubulaire en vertu de la rotation de la membres rotatif.

6. Le gravier de nettoyage système pour un aquarium de la revendication 5, **caractérisé en ce que** le système plus comprend un disque membre(11, 14) configuré pour tourner la rotatif membre.

7. Le gravier de nettoyage système pour un aquarium de revendication 5 ou 6, **caractérisée en ce que** le moyens de sélection comprend un connecteur biaisé (9) qui est configuré pour fournir un joint entre l'ouverture du membre avec le membre particulier tubulaire rotatif.

8. Le gravier de nettoyage système pour un aquarium de n'importe quel des revendications précédentes, **caractérisée en ce que** le système plus comprend une première soupape (16 a) disposées à sélectivement connect le membre tubulaire de la pompe.

9. Le gravier de nettoyage système pour un aquarium de n'importe quel des revendications précédentes, **caractérisée** que davantage le système comprend une seconde soupape (16 b) disposées à sélectivement Raccorder la pompe à un récipient pour recevoir le liquide aspiré ou pour fournir le liquide d'être expulsé.

10. Le gravier de nettoyage système pour un aquarium de revendications 8 et 9, **caractérisée en ce que** le premiersoupape (16 a) est plus prédisposé pour sélectivement raccorder la pompe à une source de nettoyer les fluides et le second soupape (16 b) est plus organisé se connecter de manière sélective le pompe de l'aquarium pour fournir l'aquarium avec le liquide propre.

11. Le gravier, système de nettoyage pour un aquarium demande de 9 ou 10, **caractérisée en ce que** le système plus comprend un ou plusieurs buses (5) disposées côté de la gravier, les buses étant assistés connectés au fluide dans l'aquarium.

12. Système de le nettoyage du gravier pour un aquarium de revendication 11, **caractérisée en ce que** le système plus comprend tuyauterie (6,6 a, 18, 10) raccordement des buses à fluide en la aquarium qui précède la gravier.
